# FASCICULE DE BREVET EUROPEEN

(11) **EP 4 497 362 B1**
(45) Date de publication et mention de la délivrance du brevet: **08.04.2026**
(21) Numéro de dépôt: 24189978.0
(22) Date de dépôt: 22.07.2024
(51) Int. Cl.: A47L 5/36, A47L 9/24, F16L 1/00

(54) **CONDUIT D'ASPIRATEUR ÉQUIPÉ D'UN DISPOSITIF D'ARTICULATION**
STAUBSAUGERKANAL MIT GELENKVORRICHTUNG
VACUUM CLEANER SUCTION TUBE WITH A HINGE DEVICE

(30) Priorité: 26.07.2023 FR 2308048
(43) Date de publication de la demande: 29.01.2025
(73) Titulaire: SEB S.A., 69130 Ecully (FR)
(72) Inventeur: PHILIPPE, Christelle, 69134 ECULLY CEDEX (FR); VIVIER, Jean Damien, 69134 ECULLY CEDEX (FR); ANQUETIN, Alex, 69134 ECULLY CEDEX (FR)
(74) Mandataire: SEB Développement

(56) Documents cités:
- EP-A1- 3 656 268
- EP-A2- 2 082 675

## Description

### Domaine technique

La présente invention concerne le domaine des conduits d'aspirateur, et en particulier des aspirateurs équipés de tels conduits d'aspirateur.

### Etat de la technique

Un aspirateur comprend de façon connue un boîtier d'aspirateur équipé d'une unité d'aspiration, un suceur configuré pour être en contact avec un sol à nettoyer, et un conduit d'aspirateur reliant fluidiquement et mécaniquement le boîtier d'aspirateur au suceur et définissant un passage d'écoulement d'air.

Afin de faciliter le rangement de l'aspirateur ou un nettoyage avec l'aspirateur sous des meubles, le conduit d'aspirateur comprend avantageusement (voir par exemple le document EP 3 656 268 A1) :
- une première partie de conduit rigide et une deuxième partie de conduit rigide,
- un dispositif d'articulation reliant les première et deuxième parties rigides entre elles et configuré pour permettre un pivotement de la première partie de conduit rigide par rapport à la deuxième partie de conduit rigide autour d'un axe d'articulation et entre une configuration dépliée dans laquelle les première et deuxième parties de conduit rigides sont sensiblement alignées l'une par rapport à l'autre et une configuration pliée dans laquelle les première et deuxième parties de conduit rigides définissent entre elles un angle inférieur à 180°,
- un organe de verrouillage configuré pour verrouiller les première et deuxième parties de conduit rigides dans la configuration dépliée, l'organe de verrouillage étant monté pivotant sur l'une des première et deuxième parties de conduit rigides autour d'un axe de pivotement et entre une position de verrouillage dans laquelle l'organe de verrouillage est configuré pour coopérer avec l'autre des première et deuxième parties de conduit rigides de manière à verrouiller les première et deuxième parties de conduit rigides dans la configuration dépliée, et une position de libération dans laquelle l'organe de verrouillage est configuré pour libérer l'autre des première et deuxième parties de conduit rigides de manière à permettre un pivotement des première et deuxième parties de conduit rigides dans la configuration pliée, et
- un organe d'actionnement solidaire en mouvement de l'organe de verrouillage et monté pivotant autour de l'axe de pivotement et entre une position de repos et une position de déverrouillage, l'organe d'actionnement étant diamétralement opposé au dispositif d'articulation (et donc situé dans une partie inférieure du conduit d'aspirateur) et le conduit d'aspirateur étant configuré de telle sorte qu'un déplacement de l'organe d'actionnement de la position de repos à la position de déverrouillage entraîne un déplacement de l'organe de verrouillage de la position de verrouillage à la position de libération.

Une telle configuration du conduit d'aspirateur permet à un utilisateur, avec une même main, de déplacer l'organe de verrouillage dans la position de libération en exerçant une pression sur l'organe d'actionnement, puis d'initier un pivotement de la première partie de conduit rigide par rapport à la deuxième partie de conduit rigide vers la configuration pliée dans laquelle les première et deuxième parties de conduit rigides définissent entre elles un angle inférieur à 180°. L'action d'exercer une pression sur la partie d'actionnement, pour déplacer l'organe de verrouillage vers la position de libération, peut se faire par exemple avec l'index. L'action de pousser la première ou la deuxième partie de conduit rigide, pour initier un pivotement de la première partie de conduit rigide par rapport à la deuxième partie de conduit rigide vers la configuration pliée, peut se faire par exemple avec la paume de la même main.

Cependant, l'organe de verrouillage étant exposé, les risques de pincement des doigts d'un utilisateur, lors d'un pivotement de l'organe de verrouillage 32 entre la position de verrouillage et la position de libération, sont élevés.

De plus, lors de l'utilisation du conduit d'aspirateur en configuration dépliée, l'organe de verrouillage est susceptible d'accrocher des éléments extérieurs, ce qui peut entraîner une détérioration de l'organe de verrouillage, voire un grippage de l'organe de verrouillage.

### Résumé de l'invention

La présente invention vise à remédier à tout ou partie de ces inconvénients.

Le problème technique à la base de l'invention consiste notamment à fournir un conduit d'aspirateur qui soit de structure simple, fiable et ergonomique, tout en permettant une manipulation sécurisée du conduit d'aspirateur.

A cet effet, la présente invention concerne un conduit d'aspirateur définissant un passage d'écoulement d'air et comprenant :
- une première partie de conduit rigide et une deuxième partie de conduit rigide,
- un dispositif d'articulation reliant les première et deuxième parties de conduit rigides entre elles, le dispositif d'articulation comportant un axe d'articulation et étant configuré pour permettre un pivotement de la première partie de conduit rigide par rapport à la deuxième partie de conduit rigide autour de l'axe d'articulation et entre une configuration dépliée dans laquelle les première et deuxième parties de conduit rigides sont sensiblement alignées l'une par rapport à l'autre et une configuration pliée dans laquelle les première et deuxième parties de conduit rigides définissent entre elles un angle inférieur à 180°,
- un organe de verrouillage configuré pour verrouiller les première et deuxième parties de conduit rigides dans la configuration dépliée, l'organe de verrouillage étant monté pivotant sur l'une des première et deuxième parties de conduit rigides autour d'un axe de pivotement qui est sensiblement parallèle à l'axe d'articulation et étant configuré pour pivoter entre une position de verrouillage dans laquelle l'organe de verrouillage est configuré pour coopérer avec l'autre des première et deuxième parties de conduit rigides de manière à verrouiller les première et deuxième parties de conduit rigides dans la configuration dépliée, et une position de libération dans laquelle l'organe de verrouillage est configuré pour libérer l'autre des première et deuxième parties de conduit rigides de manière à permettre un pivotement des première et deuxième parties de conduit rigides dans la configuration pliée, et
- un organe d'actionnement solidaire en mouvement de l'organe de verrouillage et comportant une partie d'actionnement configurée pour être actionnée manuellement par un utilisateur, l'organe de verrouillage et la partie d'actionnement étant sensiblement diamétralement opposés au dispositif d'articulation par rapport à un axe longitudinal central du conduit d'aspirateur lorsque les première et deuxième parties de conduit rigides sont dans la configuration dépliée, l'organe d'actionnement étant monté pivotant autour de l'axe de pivotement entre une position de repos et une position de déverrouillage, le conduit d'aspirateur étant configuré de telle sorte qu'un déplacement de l'organe d'actionnement de la position de repos à la position de déverrouillage entraîne un déplacement de l'organe de verrouillage de la position de verrouillage à la position de libération,

Le conduit d'aspirateur comporte un capot de recouvrement configuré pour recouvrir au moins une portion d'extrémité distale, également nommée portion d'extrémité libre, de l'organe de verrouillage, le capot de recouvrement comportant une paroi de recouvrement principale qui est configurée de telle sorte que, lorsque les première et deuxième parties de conduit rigides sont dans la configuration dépliée, la portion d'extrémité distale de l'organe de verrouillage est disposée entre la paroi de recouvrement principale et l'autre des première et deuxième parties de conduit rigides.

La présence d'un tel capot de recouvrement limite considérablement d'une part les risques d'accrochage de l'organe de verrouillage avec des éléments extérieurs lors de l'utilisation du conduit d'aspirateur en configuration dépliée, et donc les risques de grippage de l'organe de verrouillage, et d'autre part les risques de pincement des doigts d'un utilisateur lors d'un pivotement de l'organe de verrouillage entre la position de verrouillage et la position de libération.

Ainsi, le conduit d'aspirateur selon la présente invention présente une sécurité d'utilisation accrue et une fiabilité accrue par rapport aux conduits d'aspirateur de l'art antérieur.

Le conduit d'aspirateur peut en outre présenter une ou plusieurs des caractéristiques suivantes, prises seules ou en combinaison.

Selon un mode de réalisation de l'invention, lorsque les première et deuxième parties de conduit rigides sont dans la configuration dépliée, la distance radiale entre une surface interne de la paroi de recouvrement principale et une surface extérieure de l'autre des première et deuxième parties de conduit rigides est suffisante pour autoriser un débattement de la portion d'extrémité distale de l'organe de verrouillage lorsque l'organe de verrouillage est déplacé de la position de verrouillage à la position de libération.

Selon un mode de réalisation de l'invention, la paroi de recouvrement principale est configurée pour s'étendre sous l'organe de verrouillage lorsque le conduit d'aspirateur est dans une configuration normale d'utilisation.

Selon un mode de réalisation de l'invention, la partie d'actionnement comporte un bord transversal arrière qui définit le bord transversal arrière de l'organe d'actionnement.

Selon un mode de réalisation de l'invention, la partie d'actionnement présente une première dimension longitudinale, mesurée parallèlement à l'axe longitudinal central du conduit d'aspirateur en configuration dépliée des première et deuxième parties de conduit rigides, et l'organe de verrouillage présente une deuxième dimension longitudinale, mesurée parallèlement à l'axe longitudinal central du conduit d'aspirateur en configuration dépliée des première et deuxième parties de conduit rigides, qui est inférieure à la première dimension longitudinale.

Selon un mode de réalisation de l'invention, la partie d'actionnement présente une dimension longitudinale, mesurée parallèlement à l'axe longitudinal central du conduit d'aspirateur en configuration dépliée des première et deuxième parties de conduit rigides, et l'organe de verrouillage présente une dimension transversale, mesurée perpendiculairement à un plan longitudinal médian du conduit d'aspirateur en configuration dépliée des première et deuxième parties de conduit rigides, qui est inférieure à la dimension longitudinale de la partie d'actionnement.

Selon un mode de réalisation de l'invention, la partie d'actionnement est configurée pour être située intégralement en retrait d'un plan qui est parallèle à l'axe d'articulation et qui contient l'axe longitudinal central du conduit d'aspirateur lorsque les première et deuxième parties de conduit rigides sont dans la configuration dépliée.

Selon un mode de réalisation de l'invention, l'organe d'actionnement s'étend sensiblement dans le prolongement de l'organe de verrouillage.

Selon un mode de réalisation de l'invention, la partie d'actionnement et l'organe de verrouillage sont sensiblement alignés selon une direction longitudinale. En d'autres termes, la partie d'actionnement présente un premier plan longitudinal médian et l'organe de verrouillage présente un deuxième plan longitudinal médian qui est confondu avec le premier plan longitudinal médian.

Selon un mode de réalisation de l'invention, l'organe d'actionnement s'étend longitudinalement au-delà du capot de recouvrement.

Selon un mode de réalisation de l'invention, la partie d'actionnement est située intégralement à l'extérieur du capot de recouvrement. En d'autres termes, la partie d'actionnement n'est pas recouverte par le capot de recouvrement. Ces dispositions assurent une manipulation aisée de la partie d'actionnement par un utilisateur.

Selon un mode de réalisation de l'invention, la partie d'actionnement s'étend à l'opposé de l'organe de verrouillage par rapport à l'axe de pivotement.

Selon un mode de réalisation de l'invention, l'organe d'actionnement est configuré pour être déplacé dans la position de déverrouillage lorsqu'un utilisateur exerce une pression sur la partie d'actionnement.

Selon un mode de réalisation de l'invention, la partie d'actionnement comporte une surface d'appui contre laquelle un utilisateur est apte à exercer une force d'appui de manière à déplacer l'organe d'actionnement dans la position de déverrouillage, la surface d'appui étant située en retrait ou étant sensiblement affleurante avec une surface extérieure de la paroi de recouvrement principale lorsque l'organe d'actionnement occupe la position de repos. Une telle configuration de la partie d'actionnement limite les risques d'accrochage de la partie d'actionnement avec des éléments extérieurs lors de l'utilisation du conduit d'aspirateur en configuration dépliée, et donc les risques de déplacement intempestif de l'organe d'actionnement vers la position de déverrouillage.

Selon un mode de réalisation de l'invention, le capot de recouvrement est en outre configuré pour recouvrir latéralement l'organe de verrouillage.

Selon un mode de réalisation de l'invention, la partie d'actionnement comporte deux surfaces latérales extérieures qui sont sensiblement affleurantes respectivement avec deux surfaces latérales extérieures du capot de recouvrement. Une telle configuration de la partie d'actionnement limite encore les risques d'accrochage de la partie d'actionnement avec des éléments extérieurs lors de l'utilisation du conduit d'aspirateur en configuration dépliée, et donc les risques de déplacement intempestif de l'organe d'actionnement vers la position de déverrouillage, et limite également les risques de pincement des doigts d'un utilisateur lors d'un pivotement de l'organe d'actionnement entre la position de repos et la position de déverrouillage.

Selon un mode de réalisation de l'invention, chaque surface latérale extérieure de la partie d'actionnement est sensiblement parallèle à la surface latérale extérieure respective du capot de recouvrement. Une telle configuration de la partie d'actionnement limite encore les risques de déplacement intempestif de l'organe d'actionnement vers la position de déverrouillage.

Selon un mode de réalisation de l'invention, la partie d'actionnement comporte une face intérieure qui est située en regard de l'une des première et deuxième parties de conduit rigides, la face intérieure de la partie d'actionnement étant concave et arrondie. Une telle configuration de l'organe d'actionnement permet d'augmenter la course de déplacement, à savoir le débattement, de l'organe d'actionnement lors de ses déplacements entres les positions de repos et de déverrouillage, tout en limitant l'encombrement de l'organe d'actionnement. En effet, si la face inférieure de la partie d'actionnement était plane, la partie d'actionnement viendrait en butée contre une paroi externe de l'une des première et deuxième parties de conduit rigides après seulement une faible course de déplacement de l'organe d'actionnement. Or, une course de déplacement importante pour l'organe d'actionnement permet d'augmenter par exemple les dimensions d'un doigt de verrouillage prévu sur l'organe de verrouillage, et donc d'assurer un meilleur verrouillage des première et deuxième parties de conduit rigides dans la configuration dépliée.

Selon un mode de réalisation de l'invention, la face intérieure de la partie d'actionnement présente une courbure sensiblement complémentaire de la courbure extérieure de la partie de conduit rigide en regard de laquelle elle est située.

Selon un mode de réalisation de l'invention, la surface d'appui est convexe et arrondie.

Selon un mode de réalisation de l'invention, la partie d'actionnement est courbée et s'étend autour d'une portion de la périphérie extérieure de l'une des première et deuxième parties de conduit rigides. Un tel mode de réalisation permet de limiter l'encombrement de l'organe de déverrouillage et, par conséquent, du conduit d'aspirateur.

Selon un mode de réalisation de l'invention, l'organe d'actionnement et l'organe de verrouillage sont montés pivotants sur la première partie de conduit rigide, le capot de recouvrement étant fixé à la première partie de conduit rigide. Ainsi, lorsque les première et deuxième parties de conduit rigides sont dans la configuration dépliée, la portion d'extrémité distale de l'organe de verrouillage est disposée entre la paroi de recouvrement principale et la deuxième partie de conduit rigide, et est plus particulièrement disposée radialement, par rapport à un axe central de la deuxième partie de conduit rigide, entre la paroi de recouvrement principale et la deuxième partie de conduit rigide.

Selon un mode de réalisation de l'invention, la paroi de recouvrement principale s'étend parallèlement à un axe central de la première partie de conduit rigide.

Selon un mode de réalisation de l'invention, la deuxième partie de conduit rigide et le capot de recouvrement délimitent, lorsque les première et deuxième parties de conduit rigide sont dans la configuration dépliée, un logement interne dans lequel est logé, et par exemple intégralement logé, l'organe de verrouillage. Une telle configuration du capot de recouvrement limite encore les risques de grippage de l'organe de verrouillage et de pincement des doigts d'un utilisateur lors des déplacements de l'organe de verrouillage entre la position de verrouillage et la position de libération. De façon avantageuse, le logement interne s'étend radialement, par rapport à un axe central de la deuxième partie de conduit rigide, entre le capot de recouvrement et la deuxième partie de conduit rigide, et la portion d'extrémité distale de l'organe de verrouillage est configurée pour se déplacer dans ledit logement interne.

Selon un mode de réalisation de l'invention, le capot de recouvrement est configuré pour recouvrir intégralement une face inférieure de l'organe de verrouillage.

Selon un mode de réalisation de l'invention, le capot de recouvrement s'étend longitudinalement au-delà de l'axe de pivotement de l'organe de verrouillage.

Selon un mode de réalisation de l'invention, le capot de recouvrement est configuré pour rendre inaccessible l'organe de verrouillage lorsque les première et deuxième parties de conduit rigides occupent la configuration dépliée.

Selon un mode de réalisation de l'invention, l'organe d'actionnement comporte une partie de liaison reliant la partie d'actionnement à l'organe de verrouillage.

Selon un mode de réalisation de l'invention, l'organe d'actionnement comporte un épaulement transversal qui sépare la partie de liaison et la partie d'actionnement et qui est configuré de telle sorte qu'une surface inférieure de la partie de liaison est surélevée par rapport à la surface d'appui, c'est-à-dire est décalée vers le haut par rapport à la surface d'appui.

Selon un mode de réalisation de l'invention, la partie d'actionnement présente une dimension longitudinale supérieure à la dimension longitudinale de la partie de liaison.

Selon un mode de réalisation de l'invention, l'organe de verrouillage et l'organe d'actionnement sont réalisés en une seule pièce. Une telle configuration du conduit d'aspirateur facilite l'assemblage du conduit d'aspirateur, et en diminue les coûts de fabrication.

Selon un mode de réalisation de l'invention, le dispositif d'articulation est configuré pour être situé au-dessus d'une portion du passage d'écoulement d'air qui s'étend à proximité du dispositif d'articulation, lorsque le conduit d'aspirateur est en conditions normales d'utilisation. En d'autres termes, le dispositif d'articulation est configuré pour être orienté vers le haut, c'est-à-dire pour être directement visible par un utilisateur, lorsque le conduit d'aspirateur est en conditions normales d'utilisation.

Selon un mode de réalisation de l'invention, le conduit d'aspirateur comporte au moins un élément de sollicitation, tel qu'un ressort de sollicitation, configuré pour solliciter l'organe d'actionnement dans la position de repos et/ou l'organe de verrouillage dans la position de verrouillage.

Selon un mode de réalisation de l'invention, la première partie de conduit rigide est configurée pour être reliée fluidiquement à un boîtier d'aspirateur équipé d'une unité d'aspiration, et la deuxième partie de conduit rigide est configurée pour être reliée fluidiquement à un suceur configuré pour être en contact avec un sol à nettoyer.

Selon un mode de réalisation de l'invention, le conduit d'aspirateur comporte un conduit flexible reliant les première et deuxième parties de conduit rigides et définissant au moins partiellement le passage d'écoulement d'air.

Selon un mode de réalisation de l'invention, le dispositif d'articulation est configuré pour être situé au-dessus du conduit flexible lorsque le conduit d'aspirateur est en conditions normales d'utilisation. De façon avantageuse, l'axe d'articulation n'est pas sécant avec le conduit flexible.

Selon un mode de réalisation de l'invention, le conduit flexible comporte une partie tubulaire flexible, une première bague de fixation qui est fixée à une première portion d'extrémité de la partie tubulaire flexible et qui est configurée pour être fixée de manière amovible à la première partie de conduit rigide, et une deuxième bague de fixation qui est fixée à une deuxième portion d'extrémité de la partie tubulaire flexible et qui est configurée pour être fixée de manière amovible à la deuxième partie de conduit rigide. Une telle configuration du conduit flexible permet un démontage de ce dernier, notamment en vue de le nettoyer, de retirer des gros déchets coincés dans le conduit flexible ou encore de le remplacer en cas d'endommagement.

Selon un mode de réalisation de l'invention, la première bague de fixation comporte un premier dispositif de verrouillage configuré pour verrouiller, de manière réversible, la première bague de fixation sur la première partie de conduit rigide, et la deuxième bague de fixation comporte un deuxième dispositif de verrouillage configuré pour verrouiller, de manière réversible, la deuxième bague de fixation sur la deuxième partie de conduit rigide.

Selon un mode de réalisation de l'invention, le conduit d'aspirateur comporte un premier tube d'aspiration raccordé fluidiquement et mécaniquement à la première partie de conduit rigide, et un deuxième tube d'aspiration raccordé fluidiquement et mécaniquement à la deuxième partie de conduit rigide.

Selon un mode de réalisation de l'invention, le premier tube d'aspiration est configuré pour être raccordé fluidiquement et mécaniquement au boîtier d'aspirateur, et le deuxième tube d'aspiration est configuré pour être raccordé fluidiquement et mécaniquement au suceur.

La présente invention concerne en outre un aspirateur comportant :
- un boîtier d'aspirateur équipé d'une unité d'aspiration,
- un suceur configuré pour être en contact avec un sol à nettoyer, et
- un conduit d'aspirateur selon la présente invention, le conduit d'aspirateur reliant mécaniquement et fluidiquement le boîtier d'aspirateur au suceur.

L'aspirateur peut par exemple être un aspirateur balais ou un aspirateur traineau.

Selon un mode de réalisation de l'invention, l'aspirateur comporte en outre une crosse de préhension et un conduit d'aspiration flexible qui sont disposés entre le conduit d'aspirateur et le boîtier d'aspirateur et qui sont configurés pour relier mécaniquement et fluidiquement le boîtier d'aspirateur au suceur.

### Brève description des figures

De toute façon l'invention sera bien comprise à l'aide de la description qui suit en référence aux dessins schématiques annexés représentant, à titre d'exemple non limitatif, une forme d'exécution de ce conduit d'aspirateur.
Figure 1 est une vue en perspective d'un aspirateur selon l'invention.
Figure 2 est une vue partielle en perspective de côté d'un conduit d'aspirateur appartenant à l'aspirateur de la figure 1, montrant le conduit d'aspirateur en configuration dépliée.
Figure 3 est une vue partielle de dessous du conduit d'aspirateur de la figure 2.
Figure 4 est une vue partielle de dessus du conduit d'aspirateur de la figure 2.
Figure 5 est une vue partielle en perspective de côté du conduit d'aspirateur de la figure 2, montrant le conduit d'aspirateur en configuration dépliée.
Figure 6 est une vue partielle en perspective de dessous du conduit d'aspirateur de la figure 2, montrant le conduit d'aspirateur en configuration dépliée.
Figure 7 est une vue partielle en perspective de dessus du conduit d'aspirateur de la figure 2.
Figure 8 est une vue en perspective d'un organe de verrouillage, d'un organe d'actionnement et d'un capot de recouvrement appartenant au conduit d'aspirateur de la figure 2.
Figure 9 est une vue de dessus de l'organe de verrouillage, de l'organe d'actionnement et du capot de recouvrement de la figure 8.
Figure 10 est une vue en perspective arrière de l'organe de verrouillage, de l'organe d'actionnement et du capot de recouvrement de la figure 8.
Figure 11 est une vue en perspective du conduit d'aspirateur de la figure 2, montrant le conduit d'aspirateur en configuration dépliée et un conduit flexible qui est retiré hors de première et deuxième partie de conduit rigides appartenant au conduit d'aspirateur.
Figure 12 est une vue en coupe longitudinale du conduit d'aspirateur de la figure 2, montrant l'organe de verrouillage en position de verrouillage.
Figure 13 est une vue en coupe longitudinale du conduit d'aspirateur de la figure 2, montrant le conduit d'aspirateur en configuration pliée.

### Description détaillée

Dans le présent document, on entend par « sensiblement affleurante » deux surfaces qui sont affleurante ou qui présentent un décalage inférieur à 3 mm, et par exemple inférieur à 1 mm.

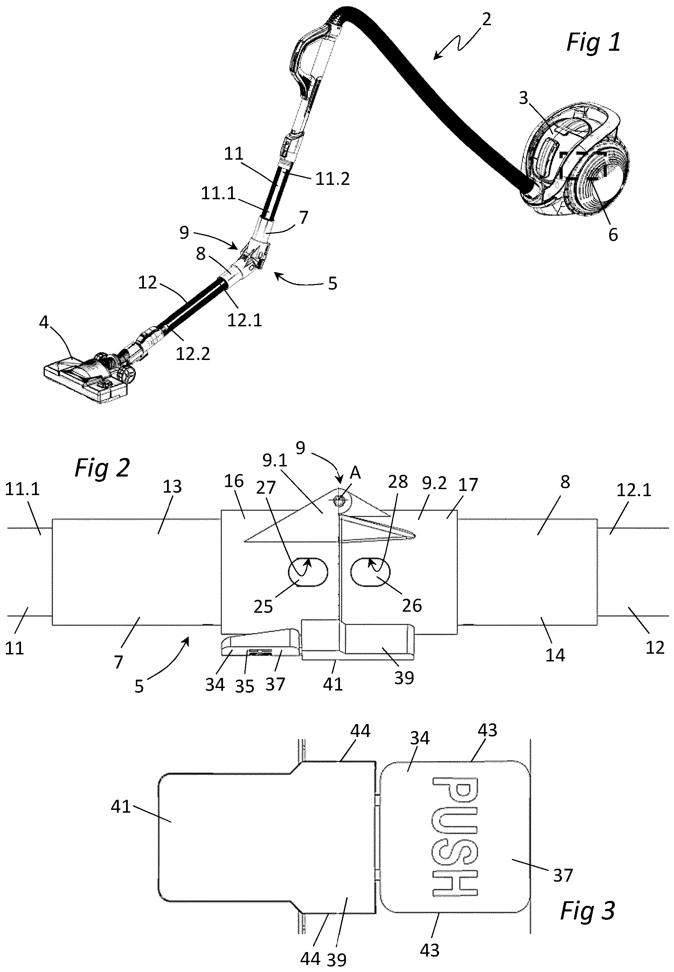

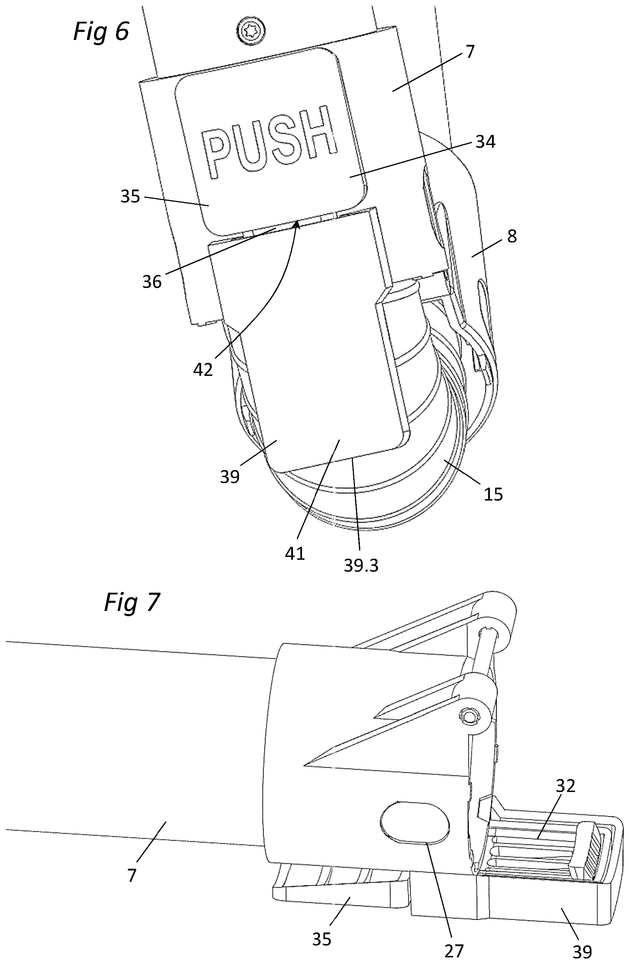

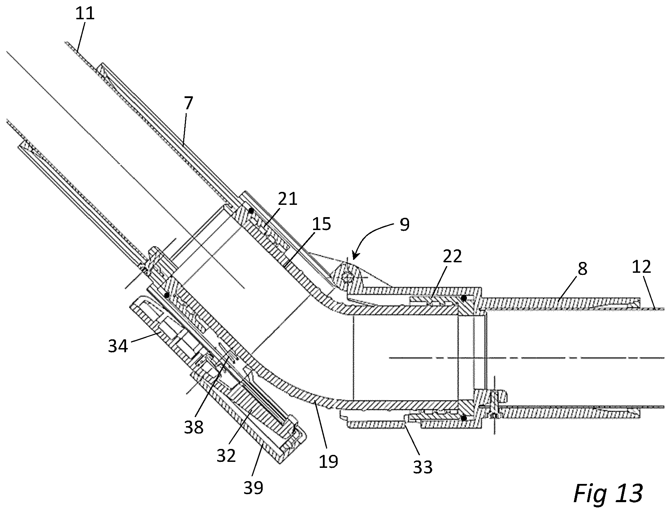

Les figures 1 à 13 représentent un aspirateur 2, et plus particulièrement un aspirateur traineau, qui comporte un boîtier d'aspirateur 3, un suceur 4 configuré pour être en contact avec un sol à nettoyer, et un conduit d'aspirateur 5 reliant fluidiquement et mécaniquement le boîtier d'aspirateur 3 au suceur 4. Le boîtier d'aspirateur 3 est équipé, de façon connue, notamment d'une unité d'aspiration 6 qui peut par exemple comporter un moto-ventilateur électrique, et d'un dispositif de séparation et de stockage de déchets.

Comme montré sur la figure 2, le conduit d'aspirateur 5 comprend une première partie de conduit rigide 7, une deuxième partie de conduit rigide 8, et un dispositif d'articulation 9 reliant les première et deuxième parties de conduit rigides 7, 8 entre elles.

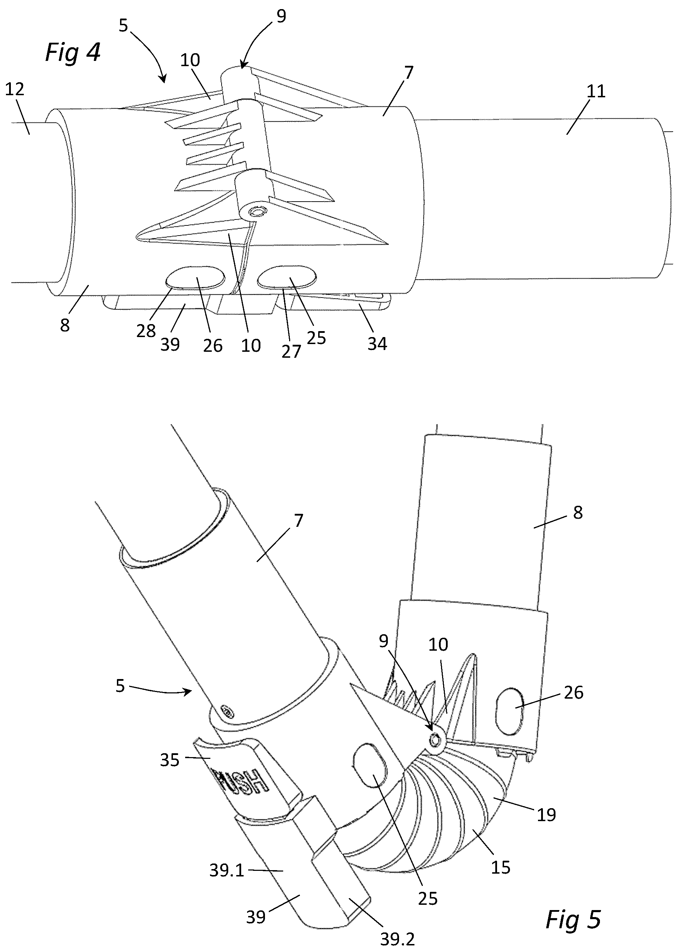

Le dispositif d'articulation 9 est configuré pour permettre un pivotement de la première partie de conduit rigide 7 par rapport à la deuxième partie de conduit rigide 8 autour d'un axe d'articulation A et entre une configuration dépliée (voir la figure 2) dans laquelle les première et deuxième parties de conduit rigides 7, 8 sont alignées l'une par rapport à l'autre et une configuration pliée (voir la figure 5) dans laquelle les première et deuxième parties de conduit rigides 7, 8 définissent entre elles un angle inférieur à 180°. De façon avantageuse, le dispositif d'articulation 9 est configuré pour être orienté vers le haut, c'est-à-dire pour faire face à un utilisateur, lorsque le conduit d'aspirateur 5 est en conditions normales d'utilisation, et est également configuré de telle sorte que l'axe d'articulation A n'est pas sécant avec les première et deuxième parties de conduit rigides 7, 8.

Selon le mode de réalisation représenté sur les figures, le dispositif d'articulation 9 comporte une première partie de charnière 9.1 fixée à une surface externe de la première partie de conduit rigide 7, et une deuxième partie de charnière 9.2 fixée à une surface externe de la deuxième partie de conduit rigide 8. De façon avantageuse, la deuxième partie de conduit rigide 8 comporte deux nervures de protection latérales 10 qui sont situées respectivement de part et d'autre de la deuxième partie de charnière 9.2 (voir les figures 4 et 5) et qui sont configurées pour éviter les pincements ou coincement d'objets extérieurs au niveau du dispositif d'articulation 9.

Le conduit d'aspirateur 5 comporte en outre un premier tube d'aspiration 11 comprenant une portion d'extrémité proximale 11.1 raccordée fluidiquement et mécaniquement à la première partie de conduit rigide 7, et une portion d'extrémité distale 11.2 configurée pour être raccordée fluidiquement et mécaniquement au boîtier d'aspirateur 3, par exemple directement dans le cas d'un aspirateur balais, ou par l'intermédiaire d'une crosse de préhension et d'un conduit d'aspiration flexible dans le cas d'un aspirateur traineau. Le conduit d'aspirateur 5 comporte également un deuxième tube d'aspiration 12 comprenant une portion d'extrémité proximale 12.1 raccordée fluidiquement et mécaniquement à la deuxième partie de conduit rigide 8, et une portion d'extrémité distale 12.2 configurée pour être raccordée fluidiquement et mécaniquement au suceur 4.

Selon le mode de réalisation représenté sur les figures, la première partie de conduit rigide 7 comporte une première portion de raccordement 13 qui est tubulaire et qui est raccordée fluidiquement et mécaniquement à la portion d'extrémité proximale 11.1 du premier tube d'aspiration 11, et la deuxième partie de conduit rigide 8 comporte une deuxième portion de raccordement 14 qui est tubulaire et qui est raccordée fluidiquement et mécaniquement à la portion d'extrémité proximale 12.1 du deuxième tube d'aspiration 12.

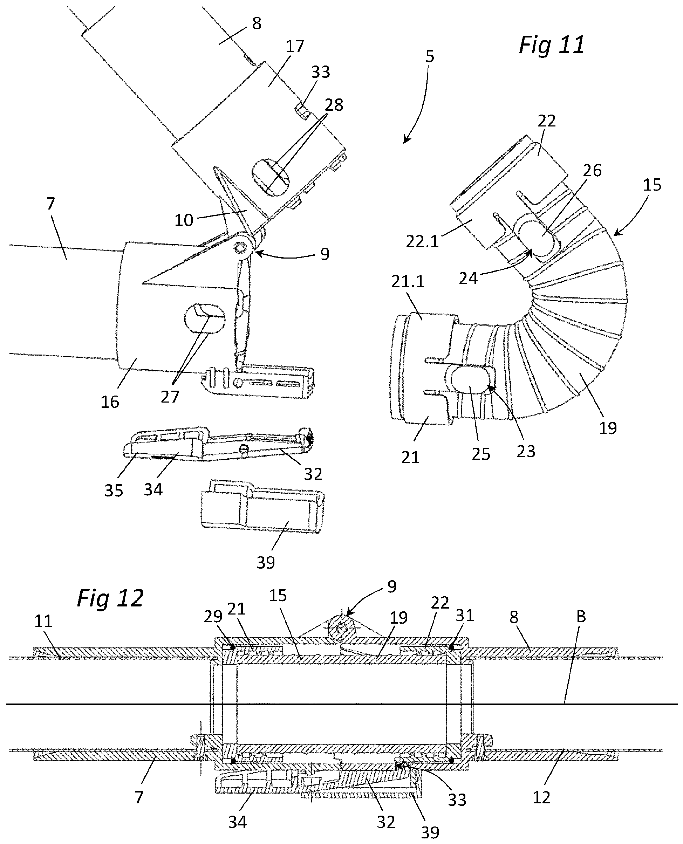

Comme montré plus particulièrement sur les figures 5 et 11, le conduit d'aspirateur 5 comporte de plus un conduit flexible 15 délimitant un passage d'écoulement interne et reliant les première et deuxième parties de conduit rigides 7, 8. Le conduit flexible 15 est plus particulièrement configuré pour relier fluidiquement les première et deuxième portions de raccordement 13, 14, de telle sorte que la première portion de raccordement 13, la deuxième portion de raccordement 14, les premier et deuxième tubes d'aspiration 11, 12 et le conduit flexible 15 définissent un passage d'écoulement d'air relié d'une part à l'unité d'aspiration 6 et d'autre part au suceur 4.

Selon le mode de réalisation représenté sur les figures, les première et deuxième parties de conduit rigides 7, 8 comportent respectivement des première et deuxième portions de montage 16, 17 qui sont tubulaires, et les première et deuxième portions de montage 16, 17 délimitent un logement de réception 18 dans lequel est monté le conduit flexible 15. De façon avantageuse, la première portion de montage 16 comporte une première ouverture d'insertion et la deuxième portion de montage 17 comporte une deuxième ouverture d'insertion qui est configurée pour être située en regard de la première ouverture d'insertion lorsque les première et deuxième parties de conduit rigides 7, 8 occupent la configuration dépliée.

Le conduit flexible 15 comporte plus particulièrement une partie tubulaire flexible 19, une première bague de fixation 21 qui est fixée à une première portion d'extrémité de la partie tubulaire flexible 19 et qui est configurée pour être fixée de manière amovible à la première portion de montage 16, et une deuxième bague de fixation 22 qui est fixée à une deuxième portion d'extrémité de la partie tubulaire flexible 19 et qui est configurée pour être fixée de manière amovible à la deuxième portion de montage 17. La première bague de fixation 21 est plus particulièrement configurée pour être insérée dans la première portion de montage 16 via la première ouverture d'insertion, et la deuxième bague de fixation 22 est plus particulièrement configurée pour être insérée dans la deuxième portion de montage 17 via la deuxième ouverture d'insertion.

Selon le mode de réalisation représenté sur les figures, la première bague de fixation 21 comporte un premier dispositif de verrouillage 23 configuré pour verrouiller, de manière réversible, la première bague de fixation 21 sur la première portion de montage 16, et la deuxième bague de fixation 22 comporte un deuxième dispositif de verrouillage 24 configuré pour verrouiller, de manière réversible, la deuxième bague de fixation 22 sur la deuxième portion de montage 17.

Le premier dispositif de verrouillage 23 comporte plus particulièrement deux premiers éléments de verrouillage 25, tels que des premiers bras de verrouillage ou des premières languettes de verrouillage, qui sont diamétralement opposés par rapport à un axe central du conduit flexible 15 et qui sont mobiles, et avantageusement élastiquement déformables, entre une configuration de verrouillage dans laquelle les deux premiers éléments de verrouillage 25 sont éloignés l'un de l'autre et sont configurés pour coopérer avec la première portion de montage 16 de manière à verrouiller la première bague de fixation 21 sur la première portion de montage 16, et une configuration de déverrouillage dans les deux premiers éléments de verrouillage 25 sont rapprochés l'un de l'autre et sont configurés pour libérer la première portion de montage 16 de manière à autoriser un retrait de la première bague de fixation 21 hors de la première portion de montage 16. L'un des deux premiers éléments de verrouillage 25 est notamment visible sur la figure 11, tandis que l'autre des deux premiers éléments de verrouillage 25 est notamment visible sur la figure 4.

De façon similaire, le deuxième dispositif de verrouillage 24 comporte deux deuxièmes éléments de verrouillage 26, tels que des deuxièmes bras de verrouillage ou des deuxièmes languettes de verrouillage, qui sont diamétralement opposés par rapport à l'axe central du conduit flexible 15 et qui sont mobiles, et avantageusement élastiquement déformables, entre une configuration de verrouillage dans laquelle les deux deuxièmes éléments de verrouillage 26 sont éloignés l'un de l'autre et sont configurés pour coopérer avec la deuxième portion de montage 17 de manière à verrouiller la deuxième bague de fixation 22 sur la deuxième portion de montage 17, et une configuration de déverrouillage dans les deux deuxièmes éléments de verrouillage 26 sont rapprochés l'un de l'autre et sont configurés pour libérer la deuxième portion de montage 17 de manière à autoriser un retrait de la deuxième bague de fixation 22 hors de la deuxième portion de montage 17. L'un des deux deuxièmes éléments de verrouillage 26 est notamment visible sur la figure 11, tandis que l'autre des deux deuxièmes éléments de verrouillage 26 est notamment visible sur la figure 4.

Selon le mode de réalisation représenté sur les figures, la première bague de fixation 21 comporte un premier corps de bague annulaire 21.1 et chacun des premiers éléments de verrouillage 25 s'étend à partir du premier corps de bague annulaire 21.1 selon une direction d'extension qui est sensiblement parallèle à l'axe central du conduit flexible 15 lorsque ledit premier élément de verrouillage 25 occupe la configuration de verrouillage, et la deuxième bague de fixation 22 comporte un deuxième corps de bague annulaire 22.1 et chacun des deuxièmes éléments de verrouillage 26 s'étend à partir du deuxième corps de bague annulaire 22.1 selon une direction d'extension qui est également sensiblement parallèle à l'axe central du conduit flexible 15 lorsque ledit deuxième élément de verrouillage 26 occupe la configuration de verrouillage.

De façon avantageuse, chacun des premiers éléments de verrouillage 25 et des deuxièmes éléments de verrouillage 26 est configuré pour être accessible depuis l'extérieur du conduit d'aspirateur 5. Chaque premier élément de verrouillage 25 est plus particulièrement configuré pour être accessible depuis un côté latéral respectif de la première partie de conduit rigide 7, et chaque deuxième élément de verrouillage 26 est plus particulièrement configuré pour être accessible depuis un côté latéral respectif de la deuxième partie de conduit rigide 8.

Lorsque les première et deuxième parties de conduit rigides 7, 8 sont dans la configuration dépliée, chacun des premiers et deuxièmes éléments de verrouillage 25, 26 est disposé sur un côté latéral du conduit d'aspirateur 5 entre d'une part le dispositif d'articulation 9 et d'autre part l'organe de verrouillage 32. Une telle configuration permet d'accéder facilement aux deux premiers et aux deux deuxièmes éléments de verrouillage 25, 26 sans être gêné par le dispositif d'articulation 9 ou l'organe de verrouillage 32.

Selon le mode de réalisation représenté sur les figures, le premier dispositif de verrouillage 23 comporte deux premiers orifices de verrouillage 27 qui sont prévus sur la première portion de montage 16, et plus particulièrement sur deux portions latérales respectives de la première portion de montage 16, et qui sont configurés pour coopérer respectivement avec les deux premiers éléments de verrouillage 25 lorsque ces derniers sont dans la configuration de verrouillage. De façon similaire, le deuxième dispositif de verrouillage 24 comporte deux deuxièmes orifices de verrouillage 28 qui sont prévus sur la deuxième portion de montage 17, et plus particulièrement sur deux portions latérales respectives de la deuxième portion de montage 17, et qui sont configurés pour coopérer respectivement avec les deux deuxièmes éléments de verrouillage 26 lorsque ces derniers sont dans la configuration de verrouillage.

Chaque premier orifice de verrouillage 27 est plus particulièrement traversant et débouche dans une surface externe de la première portion de montage 16, de manière à permettre un accès au premier élément de verrouillage 25 respectif depuis l'extérieur du conduit d'aspirateur 5 et à permettre un déplacement du premier élément de verrouillage 25 respectif dans la configuration de déverrouillage, et chaque deuxième orifice de verrouillage 28 est plus particulièrement traversant et débouche dans une surface externe de la deuxième portion de montage 17, de manière à permettre un accès au deuxième élément de verrouillage 26 respectif depuis l'extérieur du conduit d'aspirateur 5 et à permettre un déplacement du deuxième élément de verrouillage 26 respectif dans la configuration de déverrouillage. Chacun des premiers orifices de verrouillage 27 et des deuxièmes orifices de verrouillage peut par exemple être oblong. De façon avantageuse, chaque premier orifice de verrouillage 27 est configuré pour être situé en regard d'un premier doigt de verrouillage équipant le premier élément de verrouillage 25 respectif, lorsque la première bague de fixation 21 est fixée à la première partie de conduit rigide 7, et chaque deuxième orifice de verrouillage 28 est configuré pour être situé en regard d'un deuxième doigt de verrouillage équipant le deuxième élément de verrouillage 26 respectif, lorsque la deuxième bague de fixation 22 est fixée à la deuxième partie de conduit rigide 8.

Comme montré sur la figure 11, le conduit flexible 15 comporte en outre un premier joint d'étanchéité annulaire 29 fixé à la première bague de fixation 21 et configuré pour coopérer de manière étanche avec la première partie de conduit rigide 7, et un deuxième joint d'étanchéité annulaire 31 fixé à la deuxième bague de fixation 22 et configuré pour coopérer de manière étanche avec la deuxième partie de conduit rigide 8.

Le conduit d'aspirateur 5 comporte également un organe de verrouillage 32, tel qu'une patte de verrouillage ou un loquet de verrouillage équipé(e) d'un doigt de verrouillage, configuré pour verrouiller les première et deuxième parties de conduit rigides 7, 8 dans la configuration dépliée. De façon avantageuse, l'organe de verrouillage 32 et le dispositif d'articulation 9 sont sensiblement diamétralement opposés par rapport à un axe longitudinal central B du conduit d'aspirateur 5 en configuration dépliée des première et deuxième parties de conduit rigides 7, 8.

L'organe de verrouillage 32 est monté pivotant sur la première partie de conduit rigide 7 autour d'un axe de pivotement C qui est parallèle à l'axe d'articulation A et entre une position de verrouillage dans laquelle l'organe de verrouillage 32 est configuré pour coopérer avec un élément de verrouillage 33 (visible à la figure 11), tel qu'un orifice de verrouillage apte à recevoir au moins partiellement le doigt de verrouillage précité, prévu sur la deuxième partie de conduit rigide 8 de manière à verrouiller les première et deuxième parties rigides 8, 9 dans la configuration dépliée, et une position de libération dans laquelle l'organe de verrouillage 32 est configuré pour libérer l'élément de verrouillage 33 de manière à permettre un pivotement des première et deuxième parties de conduit rigides 7, 8 dans la configuration pliée.

Le conduit d'aspirateur 5 comporte en outre un organe d'actionnement 34 configuré pour déplacer l'organe de verrouillage 32 dans la position de libération. De façon avantageuse, l'organe de verrouillage 32 et l'organe d'actionnement 34 sont réalisés en une seule pièce, et l'organe d'actionnement 34 s'étend dans le prolongement de l'organe de verrouillage 32.

L'organe d'actionnement 34 est solidaire en mouvement de l'organe de verrouillage 32, et est donc monté pivotant autour de l'axe de pivotement C et entre une position de repos (voir la figure 2) et une position de déverrouillage. Le conduit d'aspirateur 5 est plus particulièrement configuré de telle sorte qu'un déplacement de l'organe d'actionnement 34 de la position de repos à la position de déverrouillage entraîne un déplacement de l'organe de verrouillage 32 de la position de verrouillage à la position de libération.

L'organe d'actionnement 34 comporte une partie d'actionnement 35 configurée pour être actionnée manuellement par un utilisateur, et une partie de liaison 36 reliant la partie d'actionnement 35 à l'organe de verrouillage 32.

La partie d'actionnement 35 comporte plus particulièrement une surface d'appui 37 contre laquelle un utilisateur est apte à exercer une force d'appui, c'est-à-dire une pression, de manière à déplacer l'organe d'actionnement 34 dans la position de déverrouillage. Selon le mode de réalisation représenté sur les figures, la partie d'actionnement 35 comporte un bord transversal arrière qui définit le bord transversal arrière de l'organe d'actionnement 34.

De façon avantageuse, la partie d'actionnement 35 et l'organe de verrouillage 32 sont situés sur un même côté du conduit d'aspirateur 5 qui est diamétralement opposé au côté du conduit d'aspirateur 5 où est situé le dispositif d'articulation 9, et la partie d'actionnement 35 et l'organe de verrouillage 32 sont sensiblement alignés selon une direction longitudinale.

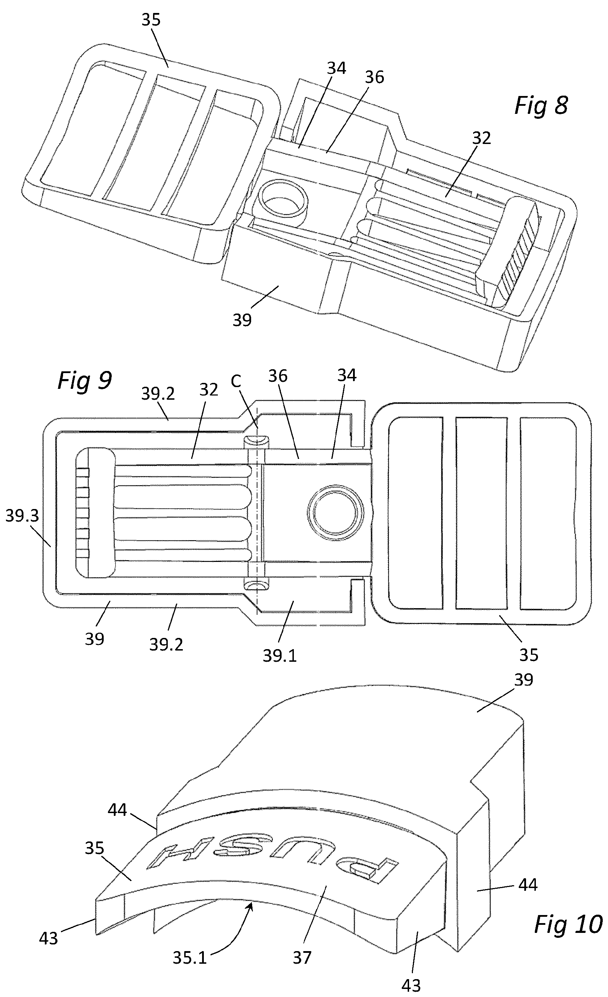

Comme montré sur la figure 10, la partie d'actionnement 35 est courbée et s'étend autour d'une portion de la périphérie extérieure de la première partie de conduit rigide 7. Ainsi, la face intérieure 35.1 de la partie d'actionnement 35, qui est située en regard de la première partie de conduit rigide 7, est concave et arrondie, et la surface d'appui 37 est convexe et arrondie. De façon avantageuse, la face intérieure 35.1 de la partie d'actionnement 35 présente une courbure sensiblement complémentaire de la courbure extérieure de la première partie de conduit rigide 7. Une telle configuration de l'organe d'actionnement 34 permet d'augmenter la course de déplacement, à savoir le débattement, de l'organe d'actionnement 34 lors de ses déplacements entres les positions de repos et de déverrouillage, tout en limitant l'encombrement de l'organe d'actionnement 34.

Selon le mode de réalisation représenté sur les figures, la partie de liaison 36 est allongée et s'étend parallèlement à l'axe longitudinal central B du conduit d'aspirateur 5 lorsque les première et deuxième parties de conduit rigides 7, 8 sont dans la configuration dépliée, et la partie d'actionnement 35 s'étend à partir d'un bord transversal arrière de la partie de liaison 36 et est donc située à l'opposé de l'organe de verrouillage 32 par rapport à l'axe de pivotement C. De façon avantageuse, la partie d'actionnement 35 est configurée pour être située intégralement en retrait d'un plan qui est parallèle à l'axe d'articulation A et qui contient l'axe longitudinal central B du conduit d'aspirateur 5 lorsque les première et deuxième parties de conduit rigides 7, 8 sont dans la configuration dépliée.

Selon le mode de réalisation représenté sur les figures, la partie d'actionnement 35 présente une première dimension longitudinale, mesurée parallèlement à l'axe longitudinal central B du conduit d'aspirateur 5 en configuration dépliée des première et deuxième parties de conduit rigides 7, 8, et l'organe de verrouillage 32 présente une deuxième dimension longitudinale, mesurée parallèlement à l'axe longitudinal central B du conduit d'aspirateur 5 en configuration dépliée des première et deuxième parties de conduit rigides 7, 8, qui est inférieure à la première dimension longitudinale. De façon avantageuse, l'organe de verrouillage 32 présente une dimension transversale, mesurée perpendiculairement à un plan longitudinal médian du conduit d'aspirateur 5 en configuration dépliée des première et deuxième parties de conduit rigides 7, 8, qui est inférieure à la première dimension longitudinale de la partie d'actionnement 35.

Le conduit d'aspirateur 5 comporte en outre un élément de sollicitation 38, tel qu'un ressort de sollicitation, configuré pour solliciter l'organe d'actionnement 34 dans la position de repos. Un tel élément de sollicitation 38 permet de définir une position de repos stable pour l'organe d'actionnement 34.

Le conduit d'aspirateur 5 comporte également un capot de recouvrement 39 qui est fixé à la première partie de conduit rigide 7 et qui est configuré pour s'étendre sous l'organe de verrouillage 32 et pour recouvrir intégralement la face inférieure de l'organe de verrouillage 32, c'est-à-dire la face de l'organe de verrouillage 32 qui est située à l'opposé de la première partie de conduit rigide 7.

Le capot de recouvrement 39 est en particulier configuré pour recouvrir une portion d'extrémité distale de l'organe de verrouillage 32. De façon avantageuse, le capot de recouvrement 39 est également configuré pour recouvrir intégralement les bords latéraux de l'organe de verrouillage 32, et pour rendre inaccessible l'organe de verrouillage 32 lorsque les première et deuxième parties de conduit rigides 7, 8 occupent la configuration dépliée. Un tel capot de recouvrement 39 limite considérablement les risques de grippage de l'organe de verrouillage 32 et également les risques de pincement des doigts d'un utilisateur lors d'un pivotement de l'organe de verrouillage 32 entre la position de verrouillage et la position de libération.

Le capot de recouvrement 39 comporte plus particulièrement une paroi de recouvrement principale 39.1 qui s'étend parallèlement à un axe central de la première partie de conduit rigide 7 et qui est configurée de telle sorte que, lorsque les première et deuxième parties de conduit rigides 7, 8 sont dans la configuration dépliée, la portion d'extrémité distale de l'organe de verrouillage 32 est disposée entre la paroi de recouvrement principale 39.1 et la deuxième partie de conduit rigide 8. La paroi de recouvrement principale 39.1 est configurée pour s'étendre sous l'organe de verrouillage 32 lorsque le conduit d'aspirateur 5 est dans une configuration normale d'utilisation.

Lorsque les première et deuxième parties de conduit rigides 7, 8 sont dans la configuration dépliée, la distance radiale entre une surface interne de la paroi de recouvrement principale 39.1 et une surface extérieure de la deuxième partie de conduit rigide 8 est suffisante pour autoriser un débattement de la portion d'extrémité distale de l'organe de verrouillage 32 lorsque l'organe de verrouillage 32 est déplacé de la position de verrouillage à la position de libération.

Le capot de recouvrement 39 comporte en outre deux parois latérales 39.2 s'étendant de part et d'autre de l'organe de verrouillage 32 et une paroi d'extrémité 39.3 située à l'opposé de la partie d'actionnement 35.

Selon le mode de réalisation représenté sur les figures, la deuxième partie de conduit rigide 8 et le capot de recouvrement 39 délimitent, lorsque les première et deuxième parties de conduit rigide 7, 8 sont dans la configuration dépliée, un logement interne dans lequel est logé l'organe de verrouillage 32.

De façon avantageuse, le capot de recouvrement 39 s'étend longitudinalement au-delà de l'axe de pivotement C de l'organe de verrouillage 32, mais l'organe d'actionnement 34 s'étend longitudinalement au-delà du capot de recouvrement 39 de telle sorte que la partie d'actionnement 35 ne soit pas recouverte par le capot de recouvrement 39, et ce afin de permettre un actionnement aisé de la partie d'actionnement 35 par un utilisateur.

Comme montré plus particulièrement sur les figures 2, la surface d'appui 37 est sensiblement affleurante avec une surface extérieure 41 du capot de recouvrement 39 lorsque l'organe d'actionnement 34 occupe la position de repos. A cet effet, l'organe d'actionnement 34 peut par exemple comporter un épaulement transversal 42 qui sépare la partie de liaison 36 et la partie d'actionnement 35 et qui est configuré de telle sorte qu'une surface inférieure de la partie de liaison 36 est surélevée par rapport à la surface d'appui 37, c'est-à-dire est décalée vers le haut par rapport à la surface d'appui 37, d'une distance correspondant sensiblement à l'épaisseur de la paroi de recouvrement principale 39.1 du capot de recouvrement 39.

De façon avantageuse, la partie d'actionnement 35 comporte deux surfaces latérales extérieures 43 qui sont également sensiblement affleurantes respectivement avec deux surfaces latérales extérieures 44 du capot de recouvrement 39 (voir la figure 3). Chaque surface latérale extérieure 43 de la partie d'actionnement 35 peut avantageusement être parallèle à la surface latérale extérieure 44 respective du capot de recouvrement 39.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Conduit d'aspirateur (5) définissant un passage d'écoulement d'air et comprenant :
- une première partie de conduit rigide (7) et une deuxième partie de conduit rigide (8),
- un dispositif d'articulation (9) reliant les première et deuxième parties de conduit rigides (7, 8) entre elles, le dispositif d'articulation (9) comportant un axe d'articulation (A) et étant configuré pour permettre un pivotement de la première partie de conduit rigide (7) par rapport à la deuxième partie de conduit rigide (8) autour de l'axe d'articulation (A) et entre une configuration dépliée dans laquelle les première et deuxième parties de conduit rigides (7, 8) sont sensiblement alignées l'une par rapport à l'autre et une configuration pliée dans laquelle les première et deuxième parties de conduit rigides (7, 8) définissent entre elles un angle inférieur à 180°,
- un organe de verrouillage (32) configuré pour verrouiller les première et deuxième parties de conduit rigides (7, 8) dans la configuration dépliée, l'organe de verrouillage (32) étant monté pivotant sur l'une des première et deuxième parties de conduit rigides (7, 8) autour d'un axe de pivotement (C) qui est sensiblement parallèle à l'axe d'articulation (A) et étant configuré pour pivoter entre une position de verrouillage dans laquelle l'organe de verrouillage (32) est configuré pour coopérer avec l'autre des première et deuxième parties de conduit rigides (7, 8) de manière à verrouiller les première et deuxième parties de conduit rigides (7, 8) dans la configuration dépliée, et une position de libération dans laquelle l'organe de verrouillage (32) est configuré pour libérer l'autre des première et deuxième parties de conduit rigides (7, 8) de manière à permettre un pivotement des première et deuxième parties de conduit rigides (7, 8) dans la configuration pliée, et
- un organe d'actionnement (34) solidaire en mouvement de l'organe de verrouillage (32) et comportant une partie d'actionnement (35) configurée pour être actionnée manuellement par un utilisateur, l'organe de verrouillage (32) et la partie d'actionnement (35) étant sensiblement diamétralement opposés au dispositif d'articulation (9) par rapport à un axe longitudinal central (B) du conduit d'aspirateur (5) lorsque les première et deuxième parties de conduit rigides (7, 8) sont dans la configuration dépliée, l'organe d'actionnement (34) étant monté pivotant autour de l'axe de pivotement (C) entre une position de repos et une position de déverrouillage, le conduit d'aspirateur (5) étant configuré de telle sorte qu'un déplacement de l'organe d'actionnement (34) de la position de repos à la position de déverrouillage entraîne un déplacement de l'organe de verrouillage (32) de la position de verrouillage à la position de libération,
**caractérisé en ce que** le conduit d'aspirateur (5) comporte un capot de recouvrement (39) configuré pour recouvrir au moins une portion d'extrémité distale de l'organe de verrouillage (32), le capot de recouvrement (39) comportant une paroi de recouvrement principale (39.1) qui est configurée de telle sorte que, lorsque les première et deuxième parties de conduit rigides (7, 8) sont dans la configuration dépliée, la portion d'extrémité distale de l'organe de verrouillage (32) est disposée entre la paroi de recouvrement principale (39.1) et l'autre des première et deuxième parties de conduit rigides (7, 8).

2. Conduit d'aspirateur (5) selon la revendication 1, dans lequel, lorsque les première et deuxième parties de conduit rigides (7, 8) sont dans la configuration dépliée, la distance radiale entre une surface interne de la paroi de recouvrement principale (39.1) et une surface extérieure de l'autre des première et deuxième parties de conduit rigides (7, 8) est suffisante pour autoriser un débattement de la portion d'extrémité distale de l'organe de verrouillage (32) lorsque l'organe de verrouillage (32) est déplacé de la position de verrouillage à la position de libération.

3. Conduit d'aspirateur (5) selon la revendication 1 ou 2, dans lequel la partie d'actionnement (35) comporte une surface d'appui (37) contre laquelle un utilisateur est apte à exercer une force d'appui de manière à déplacer l'organe d'actionnement (34) dans la position de déverrouillage, la surface d'appui (37) est située en retrait ou est sensiblement affleurante avec une surface extérieure (41) de la paroi de recouvrement principale lorsque l'organe d'actionnement (34) occupe la position de repos.

4. Conduit d'aspirateur (5) selon l'une quelconque des revendications 1 à 3, dans lequel le capot de recouvrement (39) est configuré pour recouvrir latéralement l'organe de verrouillage (32).

5. Conduit d'aspirateur (5) selon l'une quelconque des revendications 1 à 4, dans lequel la partie d'actionnement (35) comporte deux surfaces latérales extérieures qui sont sensiblement affleurantes respectivement avec deux surfaces latérales extérieures du capot de recouvrement (39).

6. Conduit d'aspirateur (5) selon la revendication 5, dans lequel chaque surface latérale extérieure de la partie d'actionnement (35) est sensiblement parallèle à la surface latérale extérieure respective du capot de recouvrement (39).

7. Conduit d'aspirateur (5) selon l'une quelconque des revendications 1 à 6, dans lequel la partie d'actionnement (35) comporte une face intérieure (35.1) qui est située en regard de l'une des première et deuxième parties de conduit rigides (7, 8), la face intérieure (35.1) de la partie d'actionnement (35) étant concave et arrondie.

8. Conduit d'aspirateur (5) selon l'une quelconque des revendications 1 à 7, dans lequel l'organe d'actionnement (34) et l'organe de verrouillage (32) sont montés pivotants sur la première partie de conduit rigide (7), le capot de recouvrement (39) étant fixé à la première partie de conduit rigide (7).

9. Conduit d'aspirateur (5) selon la revendication 8, dans lequel la deuxième partie de conduit rigide (8) et le capot de recouvrement (39) délimitent, lorsque les première et deuxième parties de conduit rigide (7, 8) sont dans la configuration dépliée, un logement interne dans lequel est logé l'organe de verrouillage (32).

10. Conduit d'aspirateur (5) selon l'une quelconque des revendications 1 à 9, dans lequel le capot de recouvrement (39) est configuré pour rendre inaccessible l'organe de verrouillage (32) lorsque les première et deuxième parties de conduit rigides (7, 8) occupent la configuration dépliée.

11. Conduit d'aspirateur (5) selon l'une quelconque des revendications 1 à 10, dans lequel le capot de recouvrement (39) s'étend longitudinalement au-delà de l'axe de pivotement (C) de l'organe de verrouillage (32).

12. Conduit d'aspirateur (5) selon l'une quelconque des revendications 1 à 11, dans lequel la première partie de conduit rigide (7) est configurée pour être reliée fluidiquement à un boîtier d'aspirateur (3) équipé d'une unité d'aspiration (6), et la deuxième partie de conduit rigide (8) est configurée pour être reliée fluidiquement à un suceur (4) configuré pour être en contact avec un sol à nettoyer.

13. Conduit d'aspirateur (5) selon l'une quelconque des revendications 1 à 12, lequel comporte un conduit flexible (15) reliant les première et deuxième parties de conduit rigides (7, 8) et définissant au moins partiellement le passage d'écoulement d'air.

14. Conduit d'aspirateur (5) selon la revendication 13, dans lequel le conduit flexible (15) comporte une partie tubulaire flexible (19), une première bague de fixation (21) qui est fixée à une première portion d'extrémité de la partie tubulaire flexible (19) et qui est configurée pour être fixée de manière amovible à la première partie de conduit rigide (7), et une deuxième bague de fixation (22) qui est fixée à une deuxième portion d'extrémité de la partie tubulaire flexible (19) et qui est configurée pour être fixée de manière amovible à la deuxième partie de conduit rigide (8).

15. Aspirateur (2) comportant :
- un boîtier d'aspirateur (3) équipé d'une unité d'aspiration,
- un suceur (4) configuré pour être en contact avec un sol à nettoyer, et
- un conduit d'aspirateur (5) selon l'une quelconque des revendications précédentes, le conduit d'aspirateur (5) reliant mécaniquement et fluidiquement le boîtier d'aspirateur (3) au suceur (4).

## Patentansprüche

1. Staubsaugerkanal (5), der einen Luftströmungskanal definiert und umfasst:
∘ einen ersten starren Kanalabschnitt (7) und einen zweiten starren Kanalabschnitt (8),
∘ eine Gelenkvorrichtung (9), die die ersten und zweiten starren Kanalabschnitte (7, 8) miteinander verbindet, wobei die Gelenkvorrichtung (9) eine Gelenkachse (A) umfasst und konfiguriert ist, um eine Drehung des ersten starren Kanalabschnitts (7) im Verhältnis zum zweiten starren Kanalabschnitt (8) um die Gelenkachse (A) und zwischen einer ausgeklappten Konfiguration, in der die ersten und zweiten starren Kanalabschnitte (7, 8) im Wesentlichen zueinander ausgerichtet sind, und einer geklappten Konfiguration, in der die ersten und zweiten starren Kanalabschnitte (7, 8) zueinander einen Winkel von weniger als 180° definieren, zu ermöglichen,
∘ ein Verriegelungselement (32), konfiguriert, um die ersten und zweiten starren Kanalabschnitte (7, 8) in der ausgeklappten Konfiguration zu verriegeln, wobei das Verriegelungselement (32) drehbar an einem der ersten und zweiten starren Kanalabschnitte (7, 8) um eine Drehachse (C) montiert ist, die im Wesentlichen parallel zur Gelenkachse (A) ist und konfiguriert ist, um zwischen einer Verriegelungsposition, in der das Verriegelungselement (32) konfiguriert ist, mit dem anderen der ersten und zweiten starren Kanalabschnitte (7, 8) zu kooperieren, um die ersten und zweiten starren Kanalabschnitte (7, 8) in der ausgeklappten Konfiguration zu verriegeln, und einer Freigabeposition zu drehen, in der das Verriegelungselement (32) konfiguriert ist, das andere der ersten und zweiten starren Kanalabschnitte (7, 8) freizugeben, um eine Drehung der ersten und zweiten starren Kanalabschnitte (7, 8) in der geklappten Konfiguration zu ermöglichen, und
∘ ein Betätigungselement (34), das sich mit dem Verriegelungselement (32) bewegt und einen Betätigungsteil (35) umfasst, der konfiguriert ist, um manuell durch einen Benutzer betätigt zu werden, wobei das Verriegelungselement (32) und der Betätigungsteil (35) im Wesentlichen gegenüber der Gelenkvorrichtung (9) relativ zur zentralen Längsachse (B) des Staubsaugerkanals (5) diametral gegenüberliegen, wenn die ersten und zweiten starren Kanalabschnitte (7, 8) in der ausgeklappten Konfiguration sind, wobei das Betätigungselement (34) drehbar um die Drehachse (C) zwischen einer Ruheposition und einer Entriegelungsposition montiert ist, wobei der Staubsaugerkanal (5) so konfiguriert ist, dass eine Bewegung des Betätigungselements (34) von der Ruheposition in die Entriegelungsposition eine Bewegung des Verriegelungselements (32) von der Verriegelungsposition in die Freigabeposition bewirkt, **dadurch gekennzeichnet, dass** der Staubsaugerkanal (5) eine Abdeckhaube (39) umfasst, die so konfiguriert ist, dass sie mindestens einen distalen Endabschnitt des Verriegelungselements (32) abdeckt, wobei die Abdeckhaube (39) eine Hauptabdeckwand (39.1) umfasst, die so konfiguriert ist, dass, wenn die ersten und zweiten starren Kanalabschnitte (7, 8) in der ausgeklappten Konfiguration sind, der distale Endabschnitt des Verriegelungselements (32) zwischen der Hauptabdeckwand (39.1) und dem anderen der ersten und zweiten starren Kanalabschnitte (7, 8) positioniert ist.

2. Staubsaugerkanal (5) gemäß Anspruch 1, wobei, wenn die ersten und zweiten starren Kanalabschnitte (7, 8) in der ausgeklappten Konfiguration sind, der Radialabstand zwischen einer Innenfläche der Hauptabdeckwand (39.1) und einer Außenfläche des anderen der ersten und zweiten starren Kanalabschnitte (7, 8) ausreichend ist, um eine Bewegung des distalen Endabschnitts des Verriegelungselements (32) zu ermöglichen, wenn das Verriegelungselement (32) von der Verriegelungsposition in die Freigabeposition bewegt wird.

3. Staubsaugerkanal (5) gemäß Anspruch 1 oder 2, wobei der Betätigungsteil (35) eine Auflagefläche (37) umfasst, gegen die ein Benutzer eine Druckkraft ausüben kann, um das Betätigungselement (34) in die Entriegelungsposition zu bewegen, wobei die Auflagefläche (37) zurückgezogen ist oder im Wesentlichen bündig mit einer Außenfläche (41) der Hauptabdeckwand liegt, wenn das Betätigungselement (34) die Ruheposition einnimmt.

4. Staubsaugerkanal (5) gemäß einem der Ansprüche 1 bis 3, wobei die Abdeckhaube (39) so konfiguriert ist, dass sie das Verriegelungselement (32) seitlich abdeckt.

5. Staubsaugerkanal (5) gemäß einem der Ansprüche 1 bis 4, wobei der Betätigungsteil (35) zwei äußere Seitenflächen umfasst, die im Wesentlichen bündig jeweils mit zwei äußeren Seitenflächen der Abdeckhaube (39) sind.

6. Staubsaugerkanal (5) gemäß Anspruch 5, wobei jede äußere Seitenfläche des Betätigungsteils (35) im Wesentlichen parallel zur jeweiligen äußeren Seitenfläche der Abdeckhaube (39) ist.

7. Staubsaugerkanal (5) gemäß einem der Ansprüche 1 bis 6, wobei der Betätigungsteil (35) eine Innenfläche (35.1) umfasst, die gegenüber einem der ersten und zweiten starren Kanalabschnitte (7, 8) liegt, wobei die Innenfläche (35.1) des Betätigungsteils (35) konkav und gerundet ist.

8. Staubsaugerkanal (5) gemäß einem der Ansprüche 1 bis 7, wobei das Betätigungselement (34) und das Verriegelungselement (32) drehbar am ersten starren Kanalabschnitt (7) montiert sind, wobei die Abdeckhaube (39) am ersten starren Kanalabschnitt (7) befestigt ist.

9. Staubsaugerkanal (5) gemäß Anspruch 8, wobei der zweite starre Kanalabschnitt (8) und die Abdeckhaube (39) einen inneren Raum definieren, in dem das Verriegelungselement (32) untergebracht ist, wenn die ersten und zweiten starren Kanalabschnitte (7, 8) in der ausgeklappten Konfiguration sind.

10. Staubsaugerkanal (5) gemäß einem der Ansprüche 1 bis 9, wobei die Abdeckhaube (39) konfiguriert ist, um das Verriegelungselement (32) unzugänglich zu machen, wenn die ersten und zweiten starren Kanalabschnitte (7, 8) die ausgeklappte Konfiguration einnehmen.

11. Staubsaugerkanal (5) gemäß einem der Ansprüche 1 bis 10, wobei die Abdeckhaube (39) sich längsseitig über die Drehachse (C) des Verriegelungselements (32) hinaus erstreckt.

12. Staubsaugerkanal (5) gemäß einem der Ansprüche 1 bis 11, wobei der erste starre Kanalabschnitt (7) so konfiguriert ist, dass er fluidisch mit einem Staubsaugergehäuse (3) verbunden werden kann, das mit einer Saugeinheit (6) ausgestattet ist, und der zweite starre Kanalabschnitt (8) so konfiguriert ist, dass er fluidisch mit einer Düse (4) verbunden werden kann, die so konfiguriert ist, dass sie mit einem zu reinigenden Boden in Kontakt steht.

13. Staubsaugerkanal (5) gemäß einem der Ansprüche 1 bis 12, der einen flexiblen Kanal (15) umfasst, der die ersten und zweiten starren Kanalabschnitte (7, 8) verbindet und mindestens teilweise den Luftströmungskanal definiert.

14. Staubsaugerkanal (5) gemäß Anspruch 13, wobei der flexible Kanal (15) einen flexiblen Rohrabschnitt (19), einen ersten Befestigungsring (21), der an einem ersten Endabschnitt des flexiblen Rohrabschnitts (19) befestigt ist und konfiguriert ist, um lösbar am ersten starren Kanalabschnitt (7) befestigt zu werden, und einen zweiten Befestigungsring (22), der an einem zweiten Endabschnitt des flexiblen Rohrabschnitts (19) befestigt ist und konfiguriert ist, um lösbar am zweiten starren Kanalabschnitt (8) befestigt zu werden, umfasst.

15. Staubsauger (2), umfassend:
• ein Staubsaugergehäuse (3), das mit einer Saugeinheit ausgestattet ist,
• eine Düse (4), die konfiguriert ist, um mit einem zu reinigenden Boden in Kontakt zu stehen, und
• einen Staubsaugerkanal (5) gemäß einem der vorherigen Ansprüche, wobei der Staubsaugerkanal (5) das Staubsaugergehäuse (3) mechanisch und fluidisch mit der Düse (4) verbindet.

## Claims

1. Vacuum cleaner pipe (5) defining an air flow passage and comprising:
∘ a first rigid pipe part (7) and a second rigid pipe part (8),
∘ a hinge device (9) connecting the first and second rigid pipe parts (7, 8) together, the hinge device (9) including a hinge axis (A) and being configured to allow pivoting of the first rigid pipe part (7) relative to the second rigid pipe part (8) around the hinge axis (A) and between a deployed configuration wherein the first and second rigid pipe parts (7, 8) are substantially aligned relative to each other and a folded configuration wherein the first and second rigid pipe parts (7, 8) define an angle less than 180° between them,
∘ a locking member (32) configured to lock the first and second rigid pipe parts (7, 8) in the deployed configuration, the locking member (32) being pivotally mounted on one of the first and second rigid pipe parts (7, 8) around a pivot axis (C) that is substantially parallel to the hinge axis (A) and being configured to pivot between a locking position wherein the locking member (32) is configured to cooperate with the other of the first and second rigid pipe parts (7, 8) to lock the first and second rigid pipe parts (7, 8) in the deployed configuration, and a release position wherein the locking member (32) is configured to release the other of the first and second rigid pipe parts (7, 8) to allow pivoting of the first and second rigid pipe parts (7, 8) into the folded configuration, and
∘ an actuating member (34) moving integrally with the locking member (32) and comprising an actuating part (35) configured to be manually actuated by a user, the locking member (32) and the actuating part (35) being substantially diametrically opposed to the hinge device (9) relative to a central longitudinal axis (B) of the vacuum cleaner pipe (5) when the first and second rigid pipe parts (7, 8) are in the deployed configuration, the actuating member (34) being pivotally mounted around the pivot axis (C) between a resting position and an unlocking position, the vacuum cleaner pipe (5) being configured such that moving the actuating member (34) from the resting position to the unlocking position causes the locking member (32) to move from the locking position to the release position, **characterized in that** the vacuum cleaner pipe (5) includes a covering cap (39) configured to cover at least a distal end portion of the locking member (32), the covering cap (39) comprising a main covering wall (39.1) configured such that, when the first and second rigid pipe parts (7, 8) are in the deployed configuration, the distal end portion of the locking member (32) is positioned between the main covering wall (39.1) and the other of the first and second rigid pipe parts (7, 8).

2. Vacuum cleaner pipe (5) according to claim 1, wherein, when the first and second rigid pipe parts (7, 8) are in the deployed configuration, the radial distance between an inner surface of the main covering wall (39.1) and an outer surface of the other of the first and second rigid pipe parts (7, 8) is sufficient to allow movement of the distal end portion of the locking member (32) when the locking member (32) is moved from the locking position to the release position.

3. Vacuum cleaner pipe (5) according to claim 1 or 2, wherein the actuating part (35) includes a support surface (37) against which a user is capable of exerting a support force to move the actuating member (34) into the unlocking position, the support surface (37) is recessed or substantially flush with an outer surface (41) of the main covering wall when the actuating member (34) occupies the resting position.

4. Vacuum cleaner pipe (5) according to any one of claims 1 to 3, wherein the covering cap (39) is configured to laterally cover the locking member (32).

5. Vacuum cleaner pipe (5) according to any one of claims 1 to 4, wherein the actuating part (35) includes two outer lateral surfaces that are substantially flush respectively with two outer lateral surfaces of the covering cap (39).

6. Vacuum cleaner pipe (5) according to claim 5, wherein each outer lateral surface of the actuating part (35) is substantially parallel to the respective outer lateral surface of the covering cap (39).

7. Vacuum cleaner pipe (5) according to any one of claims 1 to 6, wherein the actuating part (35) includes an inner face (35.1) which is opposite one of the first and second rigid pipe parts (7, 8), the inner face (35.1) of the actuating part (35) being concave and rounded.

8. Vacuum cleaner pipe (5) according to any one of claims 1 to 7, wherein the actuating member (34) and the locking member (32) are pivotally mounted on the first rigid pipe part (7), the covering cap (39) being attached to the first rigid pipe part (7).

9. Vacuum cleaner pipe (5) according to claim 8, wherein the second rigid pipe part (8) and the covering cap (39) define, when the first and second rigid pipe parts (7, 8) are in the deployed configuration, an internal housing in which the locking member (32) is housed.

10. Vacuum cleaner pipe (5) according to any one of claims 1 to 9, wherein the covering cap (39) is configured to render the locking member (32) inaccessible when the first and second rigid pipe parts (7, 8) occupy the deployed configuration.

11. Vacuum cleaner pipe (5) according to any one of claims 1 to 10, wherein the covering cap (39) extends longitudinally beyond the pivot axis (C) of the locking member (32).

12. Vacuum cleaner pipe (5) according to any one of claims 1 to 11, wherein the first rigid pipe part (7) is configured to be fluidly connected to a vacuum cleaner housing (3) equipped with a suction unit (6), and the second rigid pipe part (8) is configured to be fluidly connected to a nozzle (4) configured to be in contact with a floor to be cleaned.

13. Vacuum cleaner pipe (5) according to any one of claims 1 to 12, which includes a flexible pipe (15) connecting the first and second rigid pipe parts (7, 8) and at least partially defining the air flow passage.

14. Vacuum cleaner pipe (5) according to claim 13, wherein the flexible pipe (15) includes a flexible tubular part (19), a first fastening ring (21) which is attached to a first end portion of the flexible tubular part (19) and which is configured to be detachably attached to the first rigid pipe part (7), and a second fastening ring (22) which is attached to a second end portion of the flexible tubular part (19) and which is configured to be detachably attached to the second rigid pipe part (8).

15. Vacuum cleaner (2) comprising:
• a vacuum cleaner housing (3) equipped with a suction unit,
• a nozzle (4) configured to be in contact with a floor to be cleaned, and
• a vacuum cleaner pipe (5) according to any of the preceding claims, the vacuum cleaner pipe (5) mechanically and fluidly connecting the vacuum cleaner housing (3) to the nozzle (4).
